# EUROPEAN PATENT SPECIFICATION

(11) **EP 3 168 742 B1**
(45) Date of publication and mention of the grant of the patent: **07.07.2021**
(21) Application number: 16170923.3
(22) Date of filing: 23.05.2016
(51) Int. Cl.: G06F 9/451

(54) **METHOD AND DEVICE FOR DRAWING GUI**
VERFAHREN UND VORRICHTUNG FÜR ZEICHNUNGS-GUI
PROCÉDÉ ET DISPOSITIF POUR ÉTIRER UNE INTERFACE GRAPHIQUE

(30) Priority: 12.11.2015 CN 201510770907
(43) Date of publication of application: 17.05.2017
(73) Proprietor: Xiaomi Inc., Beijing 100085 (CN)
(72) Inventor: DONG, Junjie, 100085 BEIJING (CN)
(74) Representative: Cabinet Beau de Loménie

(56) References cited:
- WO-A1-2013/049162
- US-A1- 2002 054 136
- US-A1- 2004 111 673

## Description

### TECHNICAL FIELD

The present disclosure generally relates to the field of communication technology, and more particularly, to a method and a device for drawing a graphical user interface.

### BACKGROUND

A Graphical User Interface, briefly referred to as GUI, refers to an operable user interface displayed in a graphic form. A GUI can be drawn by using pictures in a format of Portable Network Graphics (PNG). PNG is a kind of bitmap pictures and stored as a resource in a system. In compiling these resources, each picture is assigned with a resource ID. A resource can be directly accessed with its ID. However, it occupies rather large space to draw a GUI using bitmap pictures.

Prior art document WO 2013/049162 relates to a method for smooth zooming in web applications that includes receiving a structured document defining a plurality of display elements, the plurality of display elements including a resizable container element and a scalable element defined to be located at least partially within the resizable container element; executing a rendering function that calculates a display position for each of the plurality of display elements; producing rendered content, the rendered content based at least in part on the display position for each of the plurality of display elements; receiving a scaling input; redefining the size of the scalable element according to the scaling input; and selectively redefining the size of the resizable container element based on the display position of the resizable container element with respect to the viewable area of the rendered content. The structured document can describe a plurality of display elements that, when rendered by web browser, form the visible portions of a web page.

Furthermore, prior art document US 2002/054136 discloses a method in an operating system for resizing an operating system interface element containing controls, the controls being defined by control definitions stored in a memory, the method comprising the steps of: - receiving a command to resize said interface element; - responsively to said step of receiving, defining resizable regions of said interface element responsively to said control definitions; resizing said interface element responsively to a result of said step of defining, whereby said interface element is resized by resizing only said resizable regions of said interface element.

Finally, prior art document US 2004/111673 relates to a method of controlling user interface features of a web application using the SVG markup language.

### SUMMARY

In order to solve the problem in the related art, the present disclosure provides a method and a device for drawing a graphical user interface, respectively defined in the appended claims 1-12.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart illustrating a method for drawing a graphical user interface according to an exemplary embodiment of the present disclosure.
Fig. 2 is a schematic diagram illustrating a target position of a position graphic element according to an exemplary embodiment of the present disclosure.
Fig. 3 is a block diagram of a device for drawing a graphical user interface according to an exemplary embodiment of the present disclosure.
Fig. 4 is a block diagram of another device for drawing a graphical user interface according to an exemplary embodiment of the present disclosure.
Fig. 5 is a block diagram of another device for drawing a graphical user interface according to an exemplary embodiment of the present disclosure.
Fig. 6 is a block diagram of another device for drawing a graphical user interface according to an exemplary embodiment of the present disclosure.
Fig. 7 is a block diagram of another device for drawing a graphical user interface according to an exemplary embodiment of the present disclosure.
Fig. 8 is a block diagram of another device for drawing a graphical user interface according to an exemplary embodiment of the present disclosure.
Fig. 9 is a block diagram of a device for drawing a graphical user interface according to an exemplary embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with aspects related to the invention as recited in the appended claims.

The terms used herein are merely for describing a particular embodiment, rather than limiting the present disclosure. As used in the present disclosure and the appended claims, terms in singular forms such as "a" "said" and "the" are intended to also include plural forms, unless explicitly dictated otherwise. It should also be understood that the term "and / or" used herein means any one or any possible combination of one or more associated listed items.

It should be understood that, although it may describe an element with a term first, second, or third, etc., the element is not limited by these terms. These terms are merely for distinguishing among elements of the same kind. For example, without departing from the scope of the present disclosure, a first element can also be referred to as a second element. Similarly, a second element can also be referred to as a first element. Depending on the context, a term "if" as used herein can be interpreted as "when", "where" or "in response to".

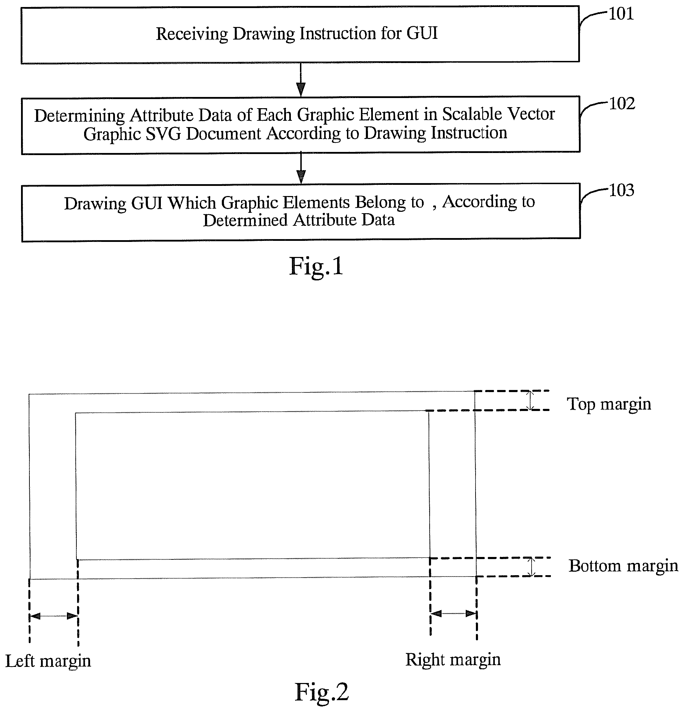

Fig. 1 is a flow chart illustrating a method for drawing a graphical user interface according to an exemplary embodiment of the present disclosure. As shown in Fig. 1, the method can be applied in a terminal, and includes the following steps.

In step 101, a drawing instruction for a GUI is received.

In step 102, attribute data of each of graphic elements in a scalable vector graphic SVG document is determined according to the drawing instruction

In step 103, the GUI which the graphic elements belong to is drawn according to the determined attribute data.

In the embodiment of the present disclosure, the terminal can be a smart terminal, such as a smart phone, a tablet computer, a Personal Digital Assistant (PDA), an e-book reader, a multimedia player, and the like.

Where, Scalable Vector Graphics (SVG) is a graphic format based on Extensible Markup Language (XML), for describing two-dimensional vector graphics. SVG specification defines features, syntax and display effects of SVG, and includes modular XML namespace and a Document Object Model (DOM). SVG can be drawn in a dynamic and interacting manner (implemented in an embedded manner or through a script). SVG not only provides hyperlinks, but also defines various events. Since SVG supports scrip language and can be programmed with Script, responding to a particular event can be done by accessing SVG DOM elements and attributes, thereby improving dynamic and interacting performance of SVG.

In a GUI based on SVG, the interface can contain a window. A window can contain interface elements each of which can contain SVG. A SVG document can contain various graphic elements and other elements. Where, a graphic element can be a rectangle, an oval, a line section, a path, and the like. A graphic element can contain a tag and/or contents of the tag. Graphic elements constitute main components of a SVG document. Data of the SVG document is all contained in the graphic elements and the attributes thereof. Information about a graphic element can be described with an attribute in a form "Name = Value". An attribute belongs to a graphic element.

In the present disclosure, a GUI is described with a SVG document. The drawing of a GUI mentioned in the present disclosure means drawing in a broad sense, and can include parsing and rendering of a SVG document. A topological structure of GUI can be an inverted tree, with the root node being an interface window, branch nodes being interface elements, and nodes below the interface elements being SVG graphic elements. Therefore, drawing can be performed level by level. For example, drawing a window can include the following steps: the window is firstly drawn; then the window turns the drawing task to SVG; SVG divides the drawing task to each of graphic elements; and the drawing is completed with the graphic elements. Then, the drawing is turned from the window to a first interface element, and the interface element turns the drawing task to the SVG for the SVG to specifically perform the drawing task. The process is continued based on this principle until drawing of the whole interface is completed. In this document, an interface element refers to a graphic element or a combination of graphic elements associated with at least one event (e.g. click, swipe, press, etc.). For example, a button (i.e. interface element) is consisted of a foreground text and a background picture (i.e. graphic elements) which are associated with a press event. For example, when the button is pressed, both the foreground text and background picture may be changed.

Wherein, in step 101, the drawing instruction is an instruction for drawing a GUI. When a drawing instruction is received, the GUI can be drawn all over again. The drawing instruction can be a scaling (resizing) instruction for a window, a style changing instruction for a GUI, a state switching instruction for an interface element, etc.

In step 102, when the drawing instruction for the GUI is received, a SVG document can be parsed according to the drawing instruction, and attribute data corresponding to each of graphic elements in the SVG document can be determined according to the parsed data and the drawing instruction. Where, the attribute data can include an attribute name and a corresponding attribute value. Since SVG is based on XML, parsing the SVG document can be performed through a Document Object Model (DOM), a Simple API for XML (SAX) or a XML Pull Parser (XPP), etc. For example, in DOM, a SVG document is represented as a DOM tree composed of node objects with a root of the tree being a Document object which represents a whole reasonable SVG document. In this parsing method, the whole SVG document is required to be parsed as a whole, and cannot be parsed part by part. For another example, SAX provides a mode for sequentially accessing a XML document. A series of events are activated while the document is accessed, and a process function of a particular event is called for handling the event. Thereby, a document of any size can be parsed, and it is not necessarily to load the whole document.

In the present disclosure, the bitmap pictures used in the prior art are replaced with SVGs which require less resources than bitmap pictures to draw GUIs, thereby, it can reduce resources occupied by pictures. In addition, attributes of SVG can be extended or added. For example, the attributes can be extended as shown in any of the following implementations.

### First implementation: extending a scaling attribute

Determining attribute data of each of graphic elements in a SVG document according to the drawing instruction includes the following steps: according to a scaling instruction for scaling a window which is contained in the drawing instruction, parsing a SVG document corresponding to the window; and determining a scaling value for a scaling attribute of each of graphic elements in the SVG document according to the parsed data obtained by parsing the SVG document and the scaling instruction, the scaling attribute being an previously added attribute of the graphic element.

In the present implementation, each of graphic elements in the SVG document can be provided with a scaling attribute, such as an attribute miui:scale-hint. The value of the scaling attribute can be equal to a value of the scaling ratio given in the scaling instruction. For example, the value of the scaling attribute can be set as equal to a scaling ratio (e.g. 1.5 times, a half, etc.) of an outer element. Alternatively, the value of the scaling attribute can be a preset value. That is, the value of the scaling attribute is a preset value regardless the scaling ratio of graphic element given in the scaling instruction, and that the value of the scaling attribute will not change by the scaling instruction. Alternatively, the value of the scaling attribute can also be a product of the scaling ratio in the scaling instruction and a scaling factor (e.g. another ratio).

When a scaling instruction for a window is received, a SVG document corresponding to the window can be parsed to obtain parsed data. The scaling value corresponding to the scaling attribute of each of graphic elements in the SVG document is determined according to the parsed data and the scaling instruction. Where, the scaling value can be a value equal to the scaling ratio in the scaling instruction, or can be a preset value, or can be a product of the scaling ratio in the scaling instruction and a scaling factor.

After the scaling value corresponding to the scaling attribute of each of graphic elements is determined, the GUI to which the graphic elements belong can be drawn according to the determined scaling values. During the drawing process, the graphic elements are drawn according to corresponding scaling values. The whole drawing process includes drawing of multiple levels of the GUI. The scaling values only influence the scaling attributes of the graphic elements, and the values of the scaling attributes of the graphic elements will be a final scaling ratio after the scaling is performed. Therefore, the GUI can be drawn according to the scaling value and other parsed drawing parameters. For example, a position and a size of a graphic element can be finally determined according to a product of a final scaling ratio and each of the other attribute values of the graphic element (for example, a position attribute value, a size attribute value and the like). Where, the other attributes are not necessarily the position attribute and the size attribute. For example, for a rectangle, a position of the rectangle is decided by values of four attributes: x, y, width and height; and for a circle, a position of the circle is decided by values of attributes: cx, cy and r, i.e. coordinates of the center of the circle cx, cy and a radius r of the circle. It could be understood that the specific drawing process can refer to relevant technology, which will not be elaborated herein.

In the present embodiment, graphic elements in the SVG document can be scaled according to various scaling ratios through an added scaling attribute. Thereby, it can avoid distortion of images caused by scaling the SVG meerly according to the scaling factor in the scaling instruction.

In an optional implementation, after the SVG document corresponding to the window is parsed according to the scaling instruction for the window in the drawing instruction, the method further includes: determining an aligning manner corresponding to an aligning attribute of each of graphic elements in the SVG document according to the parsed data obtained by parsing the SVG document and the scaling instruction, the aligning attribute being an previously added attribute of the graphic element.

In the present implementation, each of the graphic elements in the SVG document can be provided with an aligning attribute, such as an attribute miui:location. The value of a aligning attribute can be various aligning manners such as horizontally aligning, vertically aligning and/or aligning relative to a designated interface element. The horizontally aligning can include always aligning or aligning to left side, always aligning or aligning to right side, or always aligning or aligning to the center. The vertically aligning can include always aligning or aligning to upper side, always aligning or aligning to the middle, or always aligning or aligning to bottom. Aligning relative to a designated interface element can be aligning to a father interface element (default value), aligning to a certain interface element which can be denoted with the identification of the element (#<id>). In addition, it can be aligning to the whole SVG picture.

Where, the aligning attribute can have all of the three kinds of values, spaced apart with a symbol "I". For example, if it is desired that the element is always at the leftmost or at the topmost of its father element, the attribute miui:location of the element can be set as: miui:location="left|:parent|top". Where, :parent can be omitted: miui:location="left|top". If it is desired that the element is aligned with a certain element, it can be: miui:location="center|#rect", to achieve that the element is horizontally aligned at the center with an element with an identification of rect.

After a scaling value corresponding to a scaling attribute and an aligning manner corresponding to an aligning attribute of each of graphic elements are determined, the GUI which the graphic elements belong to can be drawn according to the determined scaling values and the aligning manners. For example, a final position and a size of each of graphic elements can be calculated according to the scaling value and the aligning manner in combination with other attributes of the graphic element. As such, the GUI which the graphic elements belong to is drawn. During the drawing process, the graphic elements are drawn according to respective scaling values and respective aligning manners. The whole drawing process includes drawing of multiple levels of the GUI. Scaling values and aligning manners are extended parameters in the drawing process, and in the specific drawing process, the GUI can be drawn according to the scaling values, the aligning manners and other parsed drawing parameters. It could be understood that the specific drawing process can be referred to relevant technology, which will not be elaborated herein.

It can be seen from the above embodiment, by extending a scaling attribute, each of graphic elements in the SVG document can be scaled according to a distinct ratio. In addition, by extending an aligning attribute, each of graphic elements in the SVG document can be aligned in a distinct aligning manner.

### Second implementation: extending a dynamic variable to change a style

Determining attribute data of each of graphic elements in a SVG document according to the drawing instruction includes: parsing a SVG document according to a style changing instruction contained in the drawing instruction; acquiring a target variable name of an attribute of each of graphic elements in the SVG document from the parsed data obtained by parsing the SVG document; determining a global comparison table according to the style changing instruction, the global comparison table recording, for one style, correspondence relationships between variable names and attribute values; and acquiring a target attribute value corresponding to the target variable value from the determined global comparison table.

In the present implementation, an attribute of any graphic element in a SVG document can be extended (provided) with a dynamic variable (i.e. a target variable name in the above mentioned global comparaison table), and an original attribute value (e.g. green, red...) can be replaced with a dynamic variable name (e.g. a color variable namg). For example, when a SVG document is generated, an original attribute value, which represents a style, of a graphic element can be replaced with a dynamic variable name. Additionally, in the present implementation, a plurality of global comparison tables can also be stored in advance, and each of the global comparison tables records, for a style (e.g. "fresh", "warm"), correspondence relationships between dynamic variable names (e.g. color variable name) and attribute values (e.g. green, red). In this case, when an instruction for changing a style is received, the SVG document can be parsed, and the original attribute values of the attributes of the graphic elements can be acquired according to the parsed result. When an original attributed value is actually a target variable name, a global comparison table can be determined according to the instruction for changing a style, and a target attribute value corresponding to the target dynamic variable name can be acquired from the determined global comparison table.

In addition, a format of a dynamic variable can be started with "$", the variable can be composed of letters (a-z, A-Z), digits (0-9) and an underline "-", and the largest number of characters can be limited to no more than 255. A dynamic variable is not required to be declared, and it is not required to designate a data format for a dynamic variable. After a SVG picture is loaded in to the memory, the program can perform an instruction for changing a style at any time, to change the original attribute value corresponding to (equal to) the dynamic variable name, and the type of the original attribute value can be of any type. If the attribute value of the dynamic variable is not a value acceptable by the SVG picture, the SVG picture can neglect the value.

After a target attribute value corresponding to a target variable name is determined, the GUI to which the graphic elements belong can be drawn according to the determined target attribute value. It could be understood that, the drawing process requires other drawing parameters from the parsed data, and the target attribute value is only one of the drawing parameters. In addition, the specific drawing process can be referred to relevant technology, which will not be elaborated herein.

It can be seen from the above that, when an instruction for changing a style is received, a target dynamic variable name of an attribute of a graphic element of a SVG document can be acquired from the parsed data; a global comparison table can be determined according to the instruction for changing a style; then a target attribute value corresponding to the target dynamic variable name can be acquired from the determined global comparison table; and the GUI to which the graphic elements belong is redrawn (modified or re-rendered) according to the target attribute value. Thereby, it can change a style of the GUI without, as in the prior art, requiring completely changing picture resources, therefore, it does not require to store picture resources of different styles, thus saving storage resources and improving drawing speed.

### Third implementation: extending an attribute with a state tracking function

Determining attribute data of each of graphic elements in a SVG document according to the drawing instruction includes: according to a state switching instruction for an interface element which is contained in the drawing instruction, parsing a SVG document corresponding to the interface element, the state switching instruction carrying an identification of a state and a state value of the state; deciding whether an attribute of each of graphic elements in the SVG document is an attribute tracking (associated with) the state carried in the state switching instruction according to parsed data obtained by parsing the SVG document; and if the attribute is decided as an attribute tracking the state, determining an attribute value of the attribute corresponding to the identification and the value of the state.

In this embodiment, a state is not an independent attribute, but a modification or an appendix to the attribute in question. To extend an attribute with a state tracking function, state tracking data can be correlated to the attribute. The correlation can be implemented by many ways, for example, by adding, in a data structure of the attribute, an address (or space) which directs to the state tracking data. The state tracking data includes a correspondence relationship among an identification of the state (for example a state id), a state value and an attribute value. For example, when a button (i.e. interface element) is in the non-pressed state, its state value is default or non-pressed and an attribute value of its background picture (e.g. graphic element) is green. When the button is in the pressed state, its state value is pressed and the attribute value of its background picture is red. The state id can be a digit or other symbol distinguishing different states. After an interface element issues (e.g. when an event associated with the interface element happens) an instruction for switching a state, the instruction carrying two parameters: a state Id and a state value, it can be determined which attribute(s) of a graphic element of the interface element track the state based on the parsed data and the identification of the state. An attribute value of the determined attribute can be identified from the state tracking data. The identified attribute value is given to the determined attribute when its status is switched.

In the present implementation, an attribute of a graphic element in a SVG document can preset a state tracking function. An attribute with a state tracking feature can change its attribute value according to the state of the interface element. In switching a state, the state value will change, the attribute value of the corresponding attribute tracking the state can change to an attribute value corresponding to the state value. For example, a background attribute of a button is extended with a pressed-down state tracking function. Moreover, a corresponding table for the background attribute and the pressed-down state can be previously defined in a SVG document (for example, pressed down corresponds to red color, not pressed down corresponds to green color). When the button is pressed down by the user, the pressed-down state of the button is changed to "pressed down". At this time, the background attribute value of the button is changed to "red color". In the present embodiment, an attribute of a graphic element can be extended with a state tracking function in advance, and a correspondence relationship between the state id of the interface element, state value and attribute value of the attribute can be stored in advance. When an instruction for switching a state of an interface element is received, the SVG document corresponding to the interface element can be parsed; it is decided whether the attributes of the graphic element track the state according to the parsed result. If an attribute tracks the state, the value of the attribute is changed to an attribute value corresponding to the state, and subsequently the GUI to which the graphic elements belong is drawn according to the attribute value.

It can be seen from the above that, in the present disclosure, when an instruction for switching a state of a graphic element is received, it can be decided whether an attribute of the graphic element in the SVG document tracks the state. If an attribute tracks the state, an attribute value corresponding to the identification and the state value can be determined for the attribute, and the interface element is drawn according to the attribute value. Thereby, it can modify an attribute value according to different states while not changing pictures. Then, in state switching, it is not required to change a picture, therefore, it is not required to store pictures corresponding to different states, saving storage resources and improving drawing speed.

### Fourth implementation: adding a position graphic element

Determining attribute data of each of graphic elements in a SVG document according to the drawing instruction includes: parsing a SVG document according to a content drawing instruction contained in the drawing instruction; acquiring each position graphic element from the parsed data obtained by parsing the SVG document, the position graphic element indicating a position of a content region.

Drawing the GUI to which the graphic elements belong according to the determined attribute data includes: determining position data indicated by each position graphic element as target position data of the content region; and drawing the content region according to the determined target position data and the content drawing instruction.

In this implementation, a position graphic element can be extended (provided) in a SVG, such as an element: miui::content. The position data of the position graphic element is the position data of the content region. The position data will not be drawn, but used in the calculation of the position of the content region. The position graphic element represents a position where the content region is located. The position of the position graphic element can be defined by inherent SVG attributes such as x, y, width and height, or can be defined by attributes such as miui:scale-hint and miui:location, or can be defined by an attribute miui:margin. Where, when an attribute miui:margin is defined, the value of the attribute will replace the attribute value (x, y) to finally decide the position of the graphic element. The attribute miui:scale-hint can be involved in the calculation of a size and a position of a graphic element. The attribute miui:margin indicates when the element is inside a parent element, how much is the margins. Fig. 2 is a schematic diagram illustrating a target position of a position graphic element according to an exemplary embodiment of the present disclosure. Left margin represents a left margin of the position graphic element inside the parent element; right margin represents a right margin of the position graphic element inside the parent element; top margin represents a top margin of the position graphic element inside the parent element; and bottom margin represents a bottom margin of the position graphic element inside the parent element. In this case, miui:margin can be miui:margin=" <left> <top> <right> <bottom>", such as miui:margin=" 10 20 10 20" or briefly miui:margin=" 10 20", representing left=right=10, top=bottom=20, or further briefly miui:margin=" 10", representing left=right= top=bottom.

It can be seen from the above embodiment, a position of a content region can be indicated with a position graphic element. Thereby, a position of a content region can be determined, to draw the content region according to an instruction for drawing a content. It can improve drawing efficiency.

The various technical features in the above embodiments can be combined in any manner, as long as they do not conflict to each other. For brevity, the combinations will not be described one by one. However, any combination of the technical features in the above embodiments belongs to the scope of the present disclosure.

Corresponding to the above embodiments regarding a method for drawing a graphical user interface GUI, the present disclosure also provides embodiments regarding a device for drawing a graphical user interface GUI and a terminal in which the device is applied.

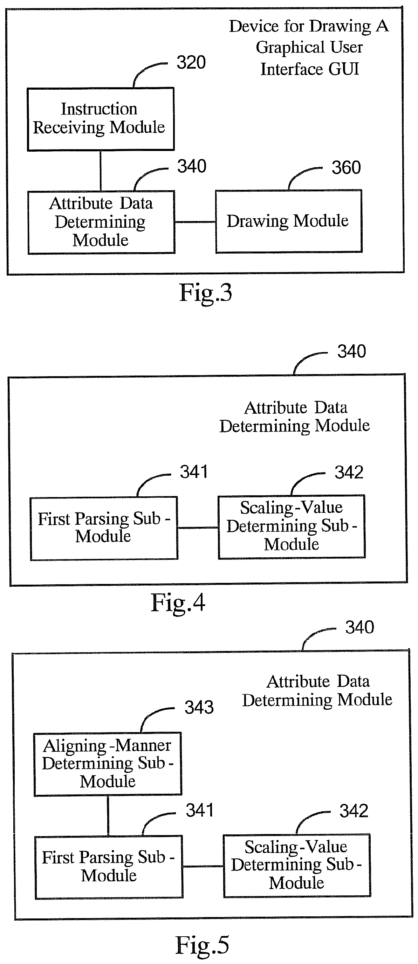

Fig. 3 is a block diagram of a device for drawing a graphical user interface according to an exemplary embodiment of the present disclosure. The device includes: an instruction receiving module 320, an attribute data determining module 340 and a drawing module 360.

Where, the instruction receiving module 320 is configured to receive a drawing instruction for a GUI.

The attribute data determining module 340 is configured to determine attribute data of each of graphic elements in a scalable vector graphic SVG document according to the drawing instruction.

The drawing module 360 is configured to draw the GUI which the graphic elements belong to, according to the determined attribute data.

It can be seen from the above that, in the present disclosure, a drawing instruction for a GUI is received. Attribute data of each of graphic elements in a scalable vector graphic SVG document is determined according to the drawing instruction. Then, the GUI which the graphic elements belong to, is drawn according to the determined attribute data. Thereby, it can replace bitmap pictures with SVG, thus reducing resources occupied by the pictures. In addition, since attribute data corresponding to a graphic element in a SVG document can be determined based on a drawing instruction, the graphic element in the SVG document can be drawn, thus improving drawing efficiency.

Fig. 4 is a block diagram of another device for drawing a graphical user interface according to an exemplary embodiment of the present disclosure. Based on the embodiment shown in Fig. 3, in the present embodiment, the attribute data determining module 340 includes: a first parsing sub-module 341 and a scaling-value determining sub-module 342.

Where the first parsing sub-module 341 is configured to, according to a scaling instruction for scaling a window which is contained in the drawing instruction, parse a SVG document corresponding to the window; and
the scaling-value determining sub-module 342 is configured to determine a scaling value corresponding to a scaling attribute of each of graphic elements in the SVG document according to the parsed data obtained by parsing the SVG document and the scaling instruction, the scaling attribute being an previously extended attribute of the graphic element.

It can be seen from the above that, in the present disclosure, graphic elements in the SVG document can be scaled according to various scaling ratios through an extended scaling attribute. Thereby, it can avoid distortion of images caused by scaling the SVG according to the single scaling factor in the scaling instruction.

Where, the scaling value equals to a scaling ratio in the scaling instruction; or,
the scaling value is a preset value; or,
the scaling value is a product of a scaling ratio in the scaling instruction and a scaling factor.

Fig. 5 is a block diagram of another device for drawing a graphical user interface according to an exemplary embodiment of the present disclosure. Based on the embodiment shown in Fig. 4, in the present embodiment, the attribute data determining module 340 also includes: an aligning-manner determining sub-module 343.

Where, the aligning-manner determining sub-module 343 is configured to determine an aligning manner corresponding to an aligning attribute of each of graphic elements in the SVG document according to the parsed data obtained by parsing the SVG document and the scaling instruction, the aligning attribute being an previously extended attribute of the graphic element

It can be seen from the above that, in the present disclosure, by extending a scaling attribute, each of graphic elements in the SVG document can be scaled according to a distinct ratio. In addition to that, by extending an aligning attribute, each of graphic elements in the SVG document can be aligned in a distinct aligning manner.

Where, the aligning manner includes: horizontally aligning, vertically aligning and/or aligning relative to a designated interface element.

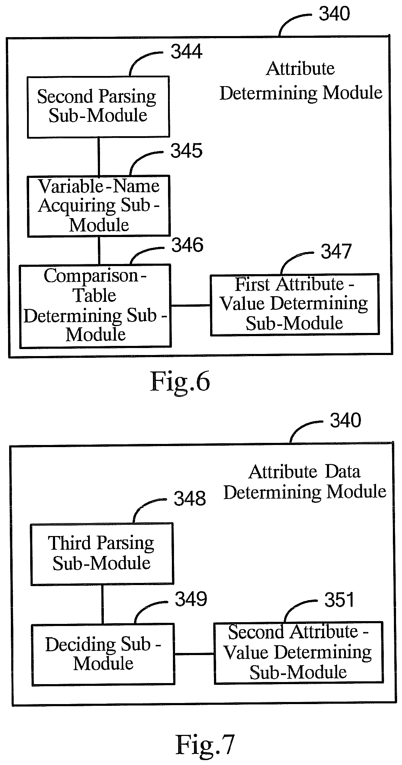

Fig. 6 is a block diagram of another device for drawing a graphical user interface according to an exemplary embodiment of the present disclosure. Based on the embodiment shown in Fig. 3, in the present embodiment, the attribute data determining module 340 also includes: a second parsing sub-module 344, a variable-name acquiring sub-module 345, a comparison-table determining sub-module 346 and a first attribute-value determining sub-module 347.

Where, the second parsing sub-module 344 is configured to parse a SVG document according to a style changing instruction contained in the drawing instruction.

The variable-name acquiring sub-module 345 is configured to acquire a target variable name of an attribute of each of graphic elements in the SVG document from the parsed data obtained by parsing the SVG document.

The comparison-table determining sub-module 346 configured to determine a global comparison table according to the style changing instruction, the global comparison table recording, for one style, correspondence relationships between variable names and attribute values.

The first attribute-value determining sub-module 347 is configured to acquire a target attribute value corresponding to the target variable value from the determined global comparison table.

It can be seen from the above that, in the present disclosure, when an instruction for changing a style is received, a target variable name of an attribute of a graphic element is a SVG document can be acquired from parsed data; a global comparison table can be determined according to the instruction for changing a style; then a target attribute value corresponding to the target variable name can be acquired from the determined global comparison table; and the GUI which the graphic elements belong to is drawn all over again according to the target attribute value. Thereby, it can change a style without requiring changing pictures to change a style, therefore, it does not require to store pictures of different styles, saving storage resources and improving drawing speed.

Fig. 7 is a block diagram of another device for drawing a graphical user interface according to an exemplary embodiment of the present disclosure. Based on the embodiment shown in Fig. 3, in the present embodiment, the attribute data determining module 340 also includes: a third parsing sub-module 348, a deciding sub-module 349 and a second attribute-value determining sub-module 351.

Where, the third parsing sub-module 348 is configured to, according to a state switching instruction for an interface element which is contained in the drawing instruction, parse a SVG document corresponding to the interface element, the state switching instruction carrying an identification of a state and a state value of the state.

The deciding sub-module 349 is configured to decide whether an attribute of each of graphic elements in the SVG document is an attribute tracking the state according to the parsed data obtained by parsing the SVG document.

The second attribute-value determining sub-module 351 is configured to, when the attribute is an attribute tracking the state, determine an attribute value of the attribute corresponding to the identification and the value of the state.

It can be seen from the above that, in the present disclosure, when an instruction for switching a state of a graphic element is received, it can be decided whether an attribute of the graphic element in the SVG document tracks the state. If an attribute tracks the state, an attribute value corresponding to the identification and the state value can be determined for the attribute, and the interface element is drawn according to the attribute value. Thereby, it can modify an attribute value according to different states while not changing pictures. Then, in state switching, it is not required to change a picture, therefore, it is not required to store pictures corresponding to different states, saving storage resources and improving drawing speed.

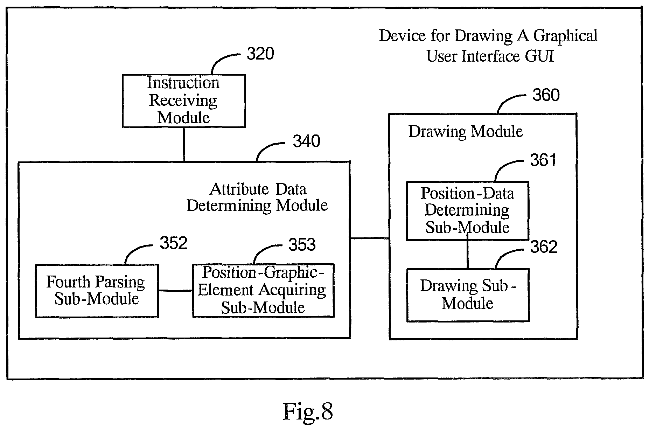

Fig. 8 is a block diagram of another device for drawing a graphical user interface according to an exemplary embodiment of the present disclosure. Based on the embodiment shown in Fig. 3, in the present embodiment, the attribute data determining module 340 also includes: a fourth parsing sub-module 352 and a position-graphic-element acquiring sub-module 353. The drawing module 360 includes: a position-data determining sub-module 361 and a drawing sub-module 362.

Where, the fourth parsing sub-module 352 is configured to parse a SVG document according to a content drawing instruction contained in the drawing instruction.

The position-graphic-element acquiring sub-module 353 is configured to acquire each position graphic element from the parsed data obtained by parsing the SVG document, the position graphic element being for indicating a position of a content region.

The position-data determining sub-module 361 is configured to determine position data indicated by each position graphic element as target position data of the content region.

The drawing sub-module 362 is configured to draw the content region according to the determined target position data and the content drawing instruction.

It can be seen from the above that, in the present disclosure, a position of a content region can be indicated with a position graphic element. Thereby, a position of a content region can be determined, to draw the content region according to an instruction for drawing a content. It can improve drawing efficiency.

Implementation of the functions and operations of the modules in the above devices can be specifically referred to the implementation of the corresponding steps in the above methods, which will not be repeated herein.

For the device embodiments, since they correspond to the method embodiments, they can be referred to the related parts of the description of the method embodiments, The device embodiments described above are merely illustrative. The units described as separate may be or may not be physically separate, and the components illustrated as units may be or may not be physical units, and may be at the same location, or may be distributed to multiple units over the network. A part of or all of the modules can be selected to achieve the objective of the present disclosure as desired. One skilled in the art can understand and practice the embodiments without paying creative labor.

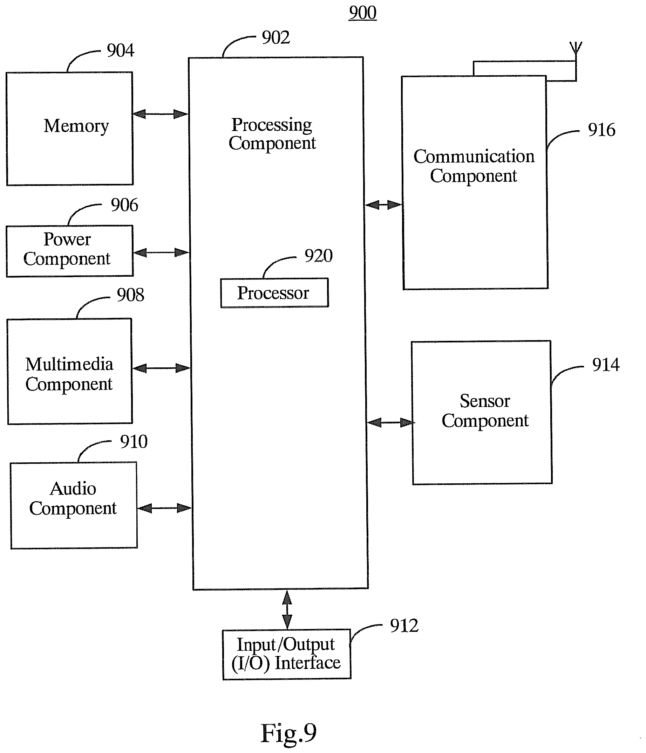

Fig. 9 is a block diagram of a device 900 for drawing a graphical user interface GUI according to an exemplary embodiment. For example, the device 900 can be a mobile phone, a computer, a digital broadcast terminal, a messaging device, a gaming console, a tablet, a medical device, exercise equipment, a personal digital assistant, and the like.

Referring to Fig. 9, the device 900 can include one or more of the following components: a processing component 902, a memory 904, a power component 906, a multimedia component 908, an audio component 910, an input/output (I/O) interface 912, a sensor component 914, and a communication component 916.

The processing component 902 typically controls overall operations of the device 900, such as the operations associated with display, telephone calls, data communications, camera operations, and recording operations. The processing component 902 can include one or more processors 920 to execute instructions to perform all or part of the steps in the above described methods. Moreover, the processing component 902 can include one or more modules which facilitate the interaction between the processing component 902 and other components. For instance, the processing component 902 can include a multimedia module to facilitate the interaction between the multimedia component 908 and the processing component 902.

The memory 904 is configured to store various types of data to support the operation of the device 900. Examples of such data include instructions for any applications or methods operated on the device 900, contact data, phonebook data, messages, pictures, video, etc. The memory 904 can be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 906 provides power to various components of the device 900. The power component 906 can include a power management system, one or more power sources, and any other components associated with the generation, management, and distribution of power in the device 900.

The multimedia component 908 includes a screen providing an output interface between the device 900 and the user. In some embodiments, the screen can include a liquid crystal display (LCD) and a touch panel (TP). If the screen includes the touch panel, the screen can be implemented as a touch screen to receive input signals from the user. The touch panel includes one or more touch sensors to sense touches, swipes, and gestures on the touch panel. The touch sensors can not only sense a boundary of a touch or swipe action, but also sense a period of time and a pressure associated with the touch or swipe action. In some embodiments, the multimedia component 908 includes a front camera and/or a rear camera. The front camera and the rear camera can receive an external multimedia datum while the device 900 is in an operation mode, such as a photographing mode or a video mode. Each of the front camera and the rear camera can be a fixed optical lens system or have focus and optical zoom capability.

The audio component 910 is configured to output and/or input audio signals. For example, the audio component 910 includes a microphone ("MIC") configured to receive an external audio signal when the device 900 is in an operation mode, such as a call mode, a recording mode, and a voice recognition mode. The received audio signal can be further stored in the memory 904 or transmitted via the communication component 916. In some embodiments, the audio component 910 further includes a speaker to output audio signals.

The I/O interface 912 provides an interface between the processing component 902 and peripheral interface modules, such as a keyboard, a click wheel, buttons, and the like. The buttons can include, but are not limited to, a home button, a volume button, a starting button, and a locking button.

The sensor component 914 includes one or more sensors to provide status assessments of various aspects of the device 900. For instance, the sensor component 914 can detect an open/closed status of the device 900, relative positioning of components, e.g., the display and the keypad, of the device 900, a change in position of the device 900 or a component of the device 900, a presence or absence of user contact with the device 900, an orientation or an acceleration/deceleration of the device 900, and a change in temperature of the device 900. The sensor component 914 can include a proximity sensor configured to detect the presence of nearby objects without any physical contact. The sensor component 914 can also include a light sensor, such as a CMOS or CCD image sensor, for use in imaging applications. In some embodiments, the sensor component 914 can also include an accelerometer sensor, a gyroscope sensor, a magnetic sensor, a pressure sensor, a microwave sensor or a temperature sensor.

The communication component 916 is configured to facilitate communication, wired or wirelessly, between the device 900 and other devices. The device 900 can access a wireless network based on a communication standard, such as WiFi, 2G, or 3G, or a combination thereof. In one exemplary embodiment, the communication component 916 receives a broadcast signal or broadcast associated information from an external broadcast management system via a broadcast channel. In one exemplary embodiment, the communication component 916 further includes a near field communication (NFC) module to facilitate short-range communications. For example, the NFC module can be implemented based on a radio frequency identification (RFID) technology, an infrared data association (IrDA) technology, an ultra-wideband (UWB) technology, a Bluetooth (BT) technology, and other technologies.

In exemplary embodiments, the device 900 can be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 904, executable by the processor 920 in the device 900, for performing the above-described methods. For example, the non-transitory computer-readable storage medium can be a ROM, a RAM, a CD-ROM, a magnetic tape, a floppy disc, an optical data storage device, and the like.

A non-transitory computer readable storage medium, when instructions in the storage medium is executed by a processor of a terminal, the terminal is caused to perform a method for drawing a graphical user interface GUI, the method including:
receiving a drawing instruction for a GUI;
determining attribute data of each of graphic elements in a scalable vector graphic SVG document according to the drawing instruction; and
drawing the GUI which the graphic elements belong to, according to the determined attribute data.

## Claims

1. A method, performed in a terminal, for drawing a graphical user interface GUI, comprising:
receiving (101) a drawing instruction for a GUI;
determining (102) attribute data for each of graphic elements of the GUI in a document according to the drawing instruction; and
drawing (103) the GUI according to the determined attribute data,
the method **characterized in that** the document is a scalar vector graphics SVG document associated with the GUI, the SVG document describing, using Extensible Markup Language (XML), graphic elements of the GUI and attributes of the graphic elements; and
that determining (102) the attribute data comprises:
according to a state switching instruction for switching a state of an interface element of the GUI which is issued by the interface element when an interactive event associated with the interface element happens and contained in the drawing instruction, parsing a SVG document corresponding to the interface element, the state switching instruction carrying an identification of a state of the interface element and a state value of the state, wherein the state switching instruction is not a scaling instruction;
deciding, according to parsed data obtained by parsing the SVG document, whether an attribute of each of graphic elements in the SVG document is an attribute tracking the state; and
when the attribute is an attribute tracking the state, determining an attribute value of the attribute corresponding to the identification and the state value of the state carried by the state switching instruction.

2. The method of claim 1, wherein the step of determining (102) attribute data for each of graphic elements in the SVG document according to the drawing instruction comprises steps of:
according to a scaling instruction for scaling a window contained in the drawing instruction, parsing a third SVG document corresponding to the window; and
determining a scaling value of a scaling attribute for each of graphic elements in the third SVG document according to parsed data obtained by parsing the third SVG document and the scaling instruction, the scaling attribute being a previously added attribute of the graphic element.

3. The method of claim 2, wherein after the third SVG document corresponding to the window is parsed according to the scaling instruction, the method further comprises a step of:
determining an aligning manner of an aligning attribute for each of graphic elements in the third SVG document according to the parsed data obtained by parsing the third SVG document and the scaling instruction, the aligning attribute being a previously added attribute of the graphic element.

4. The method of any one of claims 1 to 3, wherein the step of determining (102) attribute data for each of graphic elements in the SVG document according to the drawing instruction comprises steps of:
parsing the SVG document according to a style changing instruction contained in the drawing instruction;
acquiring a target variable name of an attribute for each of graphic elements in the SVG document from parsed data obtained by parsing the SVG document;
determining a global comparison table according to the style changing instruction, the global comparison table recording, for a style, correspondence relationships between target variable names and attribute values; and
acquiring a target attribute value corresponding to the target variable name from the determined global comparison table.

5. The method of any one of claims 1 to 4, wherein the step of determining (102) attribute data for each of graphic elements in the SVG document according to the drawing instruction comprises steps of:
parsing the SVG document according to a content drawing instruction contained in the drawing instruction;
acquiring each position graphic element from parsed data obtained by parsing the SVG document, the position graphic element comprising position data of a content region; and
wherein the step of drawing (103) the GUI according to the determined attribute data comprises steps of:
determining the position data indicated by each position graphic element as target position data of the content region; and
drawing the content region according to the target position data and the content drawing instruction.

6. A device for drawing a graphical user interface GUI in a terminal, comprising:
an instruction receiving module (320) configured to receive a drawing instruction for a GUI;
an attribute data determining module (340) configured to determine attribute data for each of graphic elements in a document according to the drawing instruction; and
a drawing module (360) configured to draw the GUI according to the determined attribute data,
the device being **characterized in that** the document is a scalable vector graphics SVG document, wherein the SVG document describes, using Extensible Markup Language (XML), graphic elements of the GUI and attributes of the graphic elements; and
that the attribute data determining module (340) comprises:
a first parsing sub-module (348) configured to, according to a state switching instruction for switching a state of an interface element of the GUI which is issued by the interface element when an interactive event associated with the interface element happens and contained in the drawing instruction, parse a second SVG document corresponding to the interface element, the state switching instruction carrying an identification of a state of the interface element and a state value of the state, wherein the state switching instruction is not a scaling instruction;
a deciding sub-module (349) configured to decide, according to parsed data obtained by parsing the SVG document, whether an attribute of each of graphic elements in the second SVG document is an attribute tracking the state; and
a first attribute-value determining sub-module (351) configured to, when the attribute is an attribute tracking the state, determine an attribute value of the attribute corresponding to the identification and the state value of the state carried by the state switching instruction.

7. The device of claim 6, wherein the attribute data determining module (340) comprises:
a second parsing sub-module (341) configured to, according to a scaling instruction for scaling a window contained in the drawing instruction, parse a third SVG document corresponding to the window; and
a scaling-value determining sub-module (342) configured to determine a scaling value of a scaling attribute for each of graphic elements in the third SVG document according to parsed data obtained by parsing the third SVG document and the scaling instruction, the scaling attribute being a previously added attribute of the graphic element.

8. The device of claim 7, wherein the attribute data determining module (340) further comprises:
an aligning-manner determining sub-module (343) configured to determine an aligning manner of an aligning attribute for each of graphic elements in the third SVG document according to parsed data obtained by parsing the third SVG document and the scaling instruction, the aligning attribute being a previously added attribute of the graphic element.

9. The device of any one of claims 6 to 8, wherein the attribute data determining module (340) comprises:
a third parsing sub-module (344) configured to parse the SVG document according to a style changing instruction contained in the drawing instruction;
a variable-name acquiring sub-module (345) configured to acquire a target variable name of an attribute for each of graphic elements in the SVG document from parsed data obtained by parsing the SVG document;
a comparison-table determining sub-module (346) configured to determine a global comparison table according to the style changing instruction, the global comparison table recording, for a style, correspondence relationships between target variable names and attribute values; and
a second attribute-value determining sub-module (347) configured to acquire a target attribute value corresponding to the target variable name from the determined global comparison table..

10. The device of any one of claims 6 to 9, wherein the attribute data determining module (340) comprises:
a fourth parsing sub-module (352) configured to parse the SVG document according to a content drawing instruction contained in the drawing instruction;
a position-graphic-element acquiring sub-module (353) configured to acquire each position graphic element from parsed data obtained by parsing the SVG document, the position graphic element comprising position data of a content region; and
wherein the drawing module (360) comprises:
a position-data determining sub-module (361) configured to determine the position data indicated by each position graphic element as target position data of the content region; and
a drawing sub-module (362) configured to draw the content region according to the determined target position data and the content drawing instruction.

11. A computer program including instructions for executing the steps of a method for drawing a graphical user interface GUI according to any one of claims 1 to 5 when said program is executed by a computer.

12. A recording medium readable by a computer and having recorded thereon a computer program including instructions for executing the steps of a method for drawing a graphical user interface GUI according to any one of claims 1 to 5.

## Patentansprüche

1. Verfahren, das in einem Endgerät durchgeführt wird, um eine grafische Benutzeroberfläche GUI zu zeichnen, umfassend:
Empfangen (101) einer Zeichenanweisung für eine GUI,
Bestimmen (102) von Attributdaten für jedes der grafischen Elemente der GUI in einem Dokument gemäß der Zeichenanweisung, und
Zeichnen (103) der GUI entsprechend der ermittelten Attributdaten,
wobei das Verfahren **dadurch gekennzeichnet ist,**
**dass** das Dokument ein skalares Vektorgrafik-(SVG-)Dokument ist, das mit der GUI verknüpft ist, wobei das SVG-Dokument unter Verwendung der Extensible Markup Language (XML) grafische Elemente der GUI und Attribute der grafischen Elemente beschreibt, und
**dass** das Bestimmen (102) der Attributdaten umfasst:
gemäß einer Zustandsumschaltanweisung zum Umschalten eines Zustands eines Schnittstellenelements der GUI, die von dem Schnittstellenelement ausgegeben wird, wenn ein mit dem Schnittstellenelement verbundenes interaktives Ereignis eintritt, und die in der Zeichenanweisung enthalten ist, Parsen eines SVG-Dokuments, das dem Schnittstellenelement entspricht, wobei die Zustandsumschaltanweisung eine Identifikation eines Zustands des Schnittstellenelements und einen Zustandswert des Zustands trägt, wobei die Zustandsumschaltanweisung keine Skalierungsanweisung ist,
Entscheiden, gemäß den geparsten Daten, die durch das Parsen des SVG-Dokuments erhalten wurden, ob ein Attribut von jedem der grafischen Elemente im SVG-Dokument ein Attribut ist, das den Zustand verfolgt, und
wenn das Attribut ein Attribut ist, das den Zustand verfolgt, Bestimmen eines Attributwerts des Attributs entsprechend der Identifikation und dem Zustandswert des Zustands, der von der Zustandsumschaltanweisung getragen wird.

2. Verfahren nach Anspruch 1, wobei der Schritt des Bestimmens (102) von Attributdaten für jedes der Grafikelemente in dem SVG-Dokument gemäß der Zeichenanweisung die Schritte umfasst des
Parsens gemäß einer in der Zeichenanweisung enthaltenen Skalierungsanweisung zum Skalieren eines Fensters eines dritten SVG-Dokuments, das dem Fenster entspricht, und
Bestimmens eines Skalierungswerts eines Skalierungsattributs für jedes der Grafikelemente in dem dritten SVG-Dokument gemäß den geparsten Daten, die durch das Parsen des dritten SVG-Dokuments und der Skalierungsanweisung erhalten wurden, wobei das Skalierungsattribut ein zuvor hinzugefügtes Attribut des Grafikelements ist.

3. Verfahren nach Anspruch 2, wobei das Verfahren, nachdem das dritte SVG-Dokument, das dem Fenster entspricht, gemäß der Skalierungsanweisung geparst wurde, ferner einen Schritt umfasst des:
Bestimmens einer Ausrichtungsart eines Ausrichtungsattributs für jedes der Grafikelemente in dem dritten SVG-Dokument gemäß den geparsten Daten, die durch das Parsen des dritten SVG-Dokuments und der Skalierungsanweisung erhalten wurden, wobei das Ausrichtungsattribut ein zuvor hinzugefügtes Attribut des Grafikelements ist.

4. Verfahren nach einem der Ansprüche 1 bis 3, wobei der Schritt des Bestimmens (102) von Attributdaten für jedes der Grafikelemente in dem SVG-Dokument gemäß der Zeichenanweisung die Schritte umfasst:
Parsen des SVG-Dokuments gemäß einer in der Zeichenanweisung enthaltenen Anweisung zur Stiländerung,
Erfassen eines Zielvariablennamens eines Attributs für jedes der Grafikelemente in dem SVG-Dokument aus geparsten Daten, die durch das Parsen des SVG-Dokuments erhalten wurden,
Bestimmen einer globalen Vergleichstabelle gemäß der Stiländerungsanweisung, wobei die globale Vergleichstabelle für einen Stil Korrespondenzbeziehungen zwischen Zielvariablennamen und Attributwerten aufzeichnet, und
Erfassen eines dem Zielvariablennamen entsprechenden Zielattributwertes aus der ermittelten globalen Vergleichstabelle.

5. Verfahren nach einem der Ansprüche 1 bis 4, wobei der Schritt des Bestimmens (102) von Attributdaten für jedes der Grafikelemente in dem SVG-Dokument gemäß der Zeichenanweisung die folgenden Schritte umfasst:
Parsen des SVG-Dokuments gemäß einer in der Zeichenanweisung enthaltenen Inhaltszeichenanweisung,
Erfassen jedes Positionsgrafikelements aus geparsten Daten, die durch Parsen des SVG-Dokuments erhalten wurden, wobei das Positionsgrafikelement Positionsdaten eines Inhaltsbereichs umfasst und
wobei der Schritt des Zeichnens (103) der GUI gemäß den ermittelten Attributdaten die folgenden Schritte umfasst:
Bestimmen der durch jedes Positionsgrafikelement angegebenen Positionsdaten als Zielpositionsdaten des Inhaltsbereichs und
Zeichnen des Inhaltsbereichs gemäß den Zielpositionsdaten und der Inhaltszeichenanweisung.

6. Vorrichtung zum Zeichnen einer grafischen Benutzeroberfläche GUI in einem Endgerät, umfassend:
ein Befehlsempfangsmodul (320), das dazu konfiguriert ist, einen Zeichenbefehl für eine GUI zu empfangen,
ein Attributdaten-Bestimmungsmodul (340), das dazu konfiguriert ist, Attributdaten für jedes der Grafikelemente in einem Dokument gemäß der Zeichenanweisung zu bestimmen, und
ein Zeichenmodul (360), das dazu konfiguriert ist, die GUI entsprechend den ermittelten Attributdaten zu zeichnen,
wobei die Vorrichtung **dadurch gekennzeichnet ist,**
**dass** das Dokument ein skalierbares Vektorgrafik-(SVG-)Dokument ist, wobei das SVG-Dokument unter Verwendung der Extensible Markup Language (XML) Grafikelemente der GUI und Attribute der Grafikelemente beschreibt, und
**dass** das Attributdaten-Bestimmungsmodul (340) umfasst:
ein erstes Parsing-Untermodul (348), das dazu konfiguriert ist, gemäß einer Zustandsumschaltanweisung zum Umschalten eines Zustands eines Schnittstellenelements der GUI, die von dem Schnittstellenelement ausgegeben wird, wenn ein mit dem Schnittstellenelement assoziiertes interaktives Ereignis eintritt, und die in der Zeichenanweisung enthalten ist, ein zweites SVG-Dokument zu parsen, das dem Schnittstellenelement entspricht, wobei die Zustandsumschaltanweisung eine Identifikation eines Zustands des Schnittstellenelements und einen Zustandswert des Zustands trägt, wobei die Zustandsumschaltanweisung keine Skalierungsanweisung ist,
ein Entscheidungsuntermodul (349), das dazu konfiguriert ist, gemäß den geparsten Daten, die durch das Parsen des SVG-Dokuments erhalten wurden, zu entscheiden, ob ein Attribut jedes der Grafikelemente in dem zweiten SVG-Dokument ein Attribut ist, das den Zustand verfolgt, und
ein erstes Attributwert-Bestimmungsuntermodul (351), das dazu konfiguriert ist, wenn das Attribut ein Attribut ist, das den Zustand verfolgt, einen Attributwert des Attributs entsprechend der Identifikation und dem Zustandswert des Zustands zu bestimmen, der von der Zustandsumschaltanweisung getragen wird.

7. Vorrichtung nach Anspruch 6, wobei das Attributdatenbestimmungsmodul (340) umfasst:
ein zweites Parsing-Untermodul (341), das dazu konfiguriert ist, entsprechend einer in der Zeichenanweisung enthaltenen Skalierungsanweisung zum Skalieren eines Fensters ein drittes SVG-Dokument zu analysieren, das dem Fenster entspricht, und
ein Skalierungswert-Bestimmungsuntermodul (342), das dazu konfiguriert ist, einen Skalierungswert eines Skalierungsattributs für jedes von Grafikelementen in dem dritten SVG-Dokument gemäß geparsten Daten zu bestimmen, die durch Parsen des dritten SVG-Dokuments und der Skalierungsanweisung erhalten werden, wobei das Skalierungsattribut ein zuvor hinzugefügtes Attribut des Grafikelements ist.

8. Vorrichtung nach Anspruch 7, wobei das Attributdaten-Bestimmungsmodul (340) ferner umfasst:
ein Ausrichtungsart-Bestimmungsuntermodul (343), das dazu konfiguriert ist, eine Ausrichtungsart eines Ausrichtungsattributs für jedes von Grafikelementen in dem dritten SVG-Dokument gemäß geparsten Daten zu bestimmen, die durch Parsen des dritten SVG-Dokuments und der Skalierungsanweisung erhalten werden, wobei das Ausrichtungsattribut ein zuvor hinzugefügtes Attribut des Grafikelements ist.

9. Vorrichtung nach einem der Ansprüche 6 bis 8, wobei das Attributdatenbestimmungsmodul (340) umfasst:
ein drittes Parsing-Untermodul (344), das dazu konfiguriert ist, das SVG-Dokument gemäß einer in der Zeichenanweisung enthaltenen Anweisung zur Stiländerung zu parsen,
ein Untermodul (345) zum Erfassen von Variablennamen, das dazu konfiguriert ist, einen Zielvariablennamen eines Attributs für jedes der Grafikelemente in dem SVG-Dokument aus geparsten Daten zu erfassen, die durch Parsen des SVG-Dokuments erhalten wurden,
ein Vergleichstabellen-Bestimmungsuntermodul (346), das dazu konfiguriert ist, eine globale Vergleichstabelle gemäß der Stiländerungsanweisung zu bestimmen, wobei die globale Vergleichstabelle für einen Stil Entsprechungsbeziehungen zwischen Zielvariablennamen und Attributwerten aufzeichnet, und
ein zweites Attributwert-Bestimmungsuntermodul (347), das dazu konfiguriert ist, einen Zielattributwert, der dem Zielvariablennamen entspricht, aus der bestimmten globalen Vergleichstabelle zu erfassen.

10. Vorrichtung nach einem der Ansprüche 6 bis 9, wobei das Attributdatenbestimmungsmodul (340) umfasst:
ein viertes Parsing-Untermodul (352), das dazu konfiguriert ist, das SVG-Dokument gemäß einer in der Zeichenanweisung enthaltenen Inhaltszeichenanweisung zu parsen,
ein Positionsgrafikelement-Erfassungsuntermodul (353), das dazu konfiguriert ist, jedes Positionsgrafikelement aus geparsten Daten zu erfassen, die durch Parsen des SVG-Dokuments erhalten wurden, wobei das Positionsgrafikelement Positionsdaten eines Inhaltsbereichs umfasst, und
wobei das Zeichenmodul (360) umfasst:
ein Positionsdatenbestimmungsuntermodul (361), das dazu konfiguriert ist, die von jedem Positionsgrafikelement angegebenen Positionsdaten als Zielpositionsdaten des Inhaltsbereichs zu bestimmen, und
ein Zeichenuntermodul (362), das dazu konfiguriert ist, den Inhaltsbereich gemäß den ermittelten Zielpositionsdaten und der Inhaltszeichenanweisung zu zeichnen.

11. Computerprogramm mit Anweisungen zum Ausführen der Schritte eines Verfahrens zum Zeichnen einer grafischen Benutzeroberfläche GUI nach einem der Ansprüche 1 bis 5, wenn das Programm von einem Computer ausgeführt wird.

12. Aufzeichnungsmedium, das von einem Computer lesbar ist und auf dem ein Computerprogramm aufgezeichnet ist, das Anweisungen zum Ausführen der Schritte eines Verfahrens zum Zeichnen einer grafischen Benutzeroberfläche GUI nach einem der Ansprüche 1 bis 5 enthält.

## Revendications

1. Procédé, mis en œuvre dans un terminal, pour dessiner une interface graphique utilisateur GUI, comprenant :
la réception (101) d'une instruction de dessin pour une GUI ;
la détermination (102) de données d'attribut pour chacun des éléments graphiques de la GUI dans un document en fonction de l'instruction de dessin ; et
le dessin (103) de la GUI en fonction des données d'attribut déterminées,
le procédé étant **caractérisé en ce que** le document est un document graphique vectoriel adaptable SVG associé à la GUI, le document SVG décrivant, au moyen d'un langage de balisage extensible (XML), des éléments graphiques de la GUI et des attributs des éléments graphiques ; et
que la détermination (102) des données d'attribut comprend :
en fonction d'une instruction de commutation d'état pour commuter un état d'un élément d'interface de la GUI qui est émise par l'élément d'interface lorsqu'un événement interactif associé à l'élément d'interface se produit et contenu dans l'instruction de dessin, l'analyse d'un document SVG correspondant à l'élément d'interface, l'instruction de commutation d'état portant une identification d'un état de l'élément d'interface et une valeur d'état de l'état, dans lequel l'instruction de commutation d'état n'est pas une instruction d'adaptation ;
le fait de décider, en fonction des données analysées obtenues par analyse du document SVG, si un attribut de chacun des éléments graphiques dans le document SVG est un attribut pistant l'état ; et
lorsque l'attribut est un attribut pistant l'état, la détermination d'une valeur d'attribut de l'attribut correspondant à l'identification et à la valeur d'état de l'état portées par l'instruction de commutation d'état.

2. Procédé selon la revendication 1, dans lequel l'étape de détermination (102) des données d'attribut pour chacun des éléments graphiques dans le document SVG en fonction de l'instruction de dessin comprend les étapes de :
en fonction d'une instruction d'adaptation pour adapter une fenêtre contenue dans l'instruction de dessin, analyse d'un troisième document SVG correspondant à la fenêtre ; et
détermination d'une valeur d'adaptation d'un attribut d'adaptation pour chacun des éléments graphiques dans le troisième document SVG en fonction des données analysées obtenues par analyse du troisième document SVG et de l'instruction d'adaptation, l'attribut d'adaptation étant un attribut ajouté précédemment de l'élément graphique.

3. Procédé selon la revendication 2, dans lequel après que le troisième document SVG correspondant à la fenêtre a été analysé en fonction de l'instruction d'adaptation, le procédé comprend en outre une étape de :
détermination d'une manière d'alignement d'un attribut d'alignement pour chacun des éléments graphiques dans le troisième document SVG en fonction des données analysées obtenues par analyse du troisième document SVG et de l'instruction d'adaptation, l'attribut d'alignement étant un attribut ajouté précédemment de l'élément graphique.

4. Procédé selon l'une quelconque des revendications 1 à 3, dans lequel l'étape de détermination (102) des données d'attribut pour chacun des éléments graphiques dans le document SVG en fonction de l'instruction de dessin comprend les étapes de :
analyse du document SVG en fonction d'une instruction de changement de style contenue dans l'instruction de dessin ;
acquisition d'un nom de variable cible d'un attribut pour chacun des éléments graphiques dans le document SVG à partir des données analysées obtenues par analyse du document SVG ;
détermination d'un tableau comparatif global en fonction de l'instruction de changement de style, le tableau comparatif global enregistrant, pour un style, des relations de correspondance entre des noms de variable cibles et des valeurs d'attribut ; et
acquisition d'une valeur d'attribut cible correspondant au nom de variable cible à partir du tableau comparatif global déterminé.

5. Procédé selon l'une quelconque des revendications 1 à 4, dans lequel l'étape de détermination (102) de données d'attribut pour chacun des éléments graphiques dans le document SVG en fonction de l'instruction de dessin comprend les étapes de :
analyse du document SVG en fonction d'une instruction de dessin de contenu contenue dans l'instruction de dessin ;
acquisition de chaque élément graphique de position à partir de données analysées obtenues par analyse du document SVG, l'élément graphique de position comprenant des données de position d'une zone de contenu ; et
dans lequel l'étape de dessin (103) de la GUI en fonction des données d'attribut déterminées comprend les étapes de :
détermination des données de position indiquées par chaque élément graphique de position comme données de position cible de la zone de contenu ; et
dessin de la zone de contenu en fonction des données de position cible et de l'instruction de dessin de contenu.

6. Dispositif pour dessiner une interface graphique utilisateur GUI dans un terminal, comprenant :
un module de réception d'instruction (320) configuré pour recevoir une instruction de dessin pour une GUI ;
un module de détermination de données d'attribut (340) configuré pour déterminer des données d'attribut pour chacun des éléments graphiques dans un document en fonction de l'instruction de dessin ; et
un module de dessin (360) configuré pour dessiner la GUI en fonction des données d'attribut déterminées,
le dispositif étant **caractérisé en ce que** le document est un document graphique vectoriel adaptable SVG, dans lequel le document SVG décrit, au moyen d'un langage de balisage extensible (XML), des éléments graphiques de la GUI et des attributs des éléments graphiques ; et
que le module de détermination de données d'attribut (340) comprend :
un premier sous-module d'analyse (348) configuré pour, en fonction d'une instruction de commutation d'état pour commuter un état d'un élément d'interface de la GUI qui est émise par l'élément d'interface lorsqu'un événement interactif associé à l'élément d'interface se produit et contenue dans l'instruction de dessin, analyser un deuxième document SVG correspondant à l'élément d'interface, l'instruction de commutation d'état portant une identification d'un état de l'élément d'interface et une valeur d'état de l'état, dans lequel l'instruction de commutation d'état n'est pas une instruction d'adaptation ;
un sous-module de décision (349) configuré pour décider, en fonction de données analysées obtenues par analyse du document SVG, si un attribut de chacun des éléments graphiques dans le deuxième document SVG est un attribut pistant l'état ; et
un premier sous-module de détermination de valeur d'attribut (351) configuré pour, lorsque l'attribut est un attribut pistant l'état, déterminer une valeur d'attribut de l'attribut correspondant à l'identification et à la valeur d'état de l'état portées par l'instruction de commutation d'état.

7. Dispositif selon la revendication 6, dans lequel le module de détermination de données d'attribut (340) comprend :
un deuxième sous-module d'analyse (341) configuré pour, en fonction d'une instruction d'adaptation pour adapter une fenêtre contenue dans l'instruction de dessin, analyser un troisième document SVG correspondant à la fenêtre ; et
un sous-module de détermination de valeur d'adaptation (342) configuré pour déterminer une valeur d'adaptation d'un attribut d'adaptation pour chacun des éléments graphiques dans le troisième document SVG en fonction de données analysées obtenues par analyse du troisième document SVG et de l'instruction d'adaptation, l'attribut d'adaptation étant un attribut ajouté précédemment de l'élément graphique.

8. Dispositif selon la revendication 7, dans lequel le module de détermination de données d'attribut (340) comprend en outre :
un sous-module de détermination de manière d'alignement (343) configuré pour déterminer une manière d'alignement d'un attribut d'alignement pour chacun des éléments graphiques dans le troisième document SVG en fonction de données analysées obtenues par analyse du troisième document SVG et de l'instruction d'adaptation, l'attribut d'alignement étant un attribut ajouté précédemment de l'élément graphique.

9. Dispositif selon l'une quelconque des revendications 6 à 8, dans lequel le module de détermination de données d'attribut (340) comprend :
un troisième sous-module d'analyse (344) configuré pour analyser le document SVG en fonction d'une instruction de changement de style contenue dans l'instruction de dessin ;
un sous-module d'acquisition de nom de variable (345) configuré pour acquérir un nom de variable cible d'un attribut pour chacun des éléments graphiques dans le document SVG à partir de données analysées obtenues par analyse du document SVG ;
un sous-module de détermination de tableau comparatif (346) configuré pour déterminer un tableau comparatif global en fonction de l'instruction de changement de style, le tableau comparatif global enregistrant, pour un style, des relations de correspondance entre des noms de variable cibles et des valeurs d'attribut ; et
un deuxième sous-module de détermination de valeur d'attribut (347) configuré pour acquérir une valeur d'attribut cible correspondant au nom de variable cible à partir du tableau comparatif global déterminé.

10. Dispositif selon l'une quelconque des revendications 6 à 9, dans lequel le module de détermination de données d'attribut (340) comprend :
un quatrième sous-module d'analyse (352) configuré pour analyser le document SVG en fonction d'une instruction de dessin de contenu contenue dans l'instruction de dessin ;
un sous-module d'acquisition d'élément graphique de position (353) configuré pour acquérir chaque élément graphique de position à partir de données analysées obtenues par analyse du document SVG, l'élément graphique de position comprenant des données de position d'une zone de contenu ; et
dans lequel le module de dessin (360) comprend :
un sous-module de détermination de données de position (361) configuré pour déterminer les données de position indiquées par chaque élément graphique de position comme données de position cible de la zone de contenu ; et
un sous-module de dessin (362) configuré pour dessiner la zone de contenu en fonction des données de position cible déterminées et de l'instruction de dessin de contenu.

11. Programme informatique comportant des instructions pour exécuter les étapes d'un procédé pour dessiner une interface graphique utilisateur GUI selon l'une quelconque des revendications 1 à 5 lorsque ledit programme est exécuté par un ordinateur.

12. Support d'enregistrement lisible par un ordinateur et ayant enregistré sur celui-ci un programme informatique comportant des instructions pour exécuter les étapes d'un procédé pour dessiner une interface graphique utilisateur GUI selon l'une quelconque des revendications 1 à 5.
